(19) Europäisches Patentamt

European Patent Office

Office européen des brevets

(11) **EP 0 894 254 B1**

(12) **FASCICULE DE BREVET EUROPEEN**

(45) Date de publication et mention
de la délivrance du brevet:
**04.12.2002 Bulletin 2002/49**

(21) Numéro de dépôt: **97915406.9**

(22) Date de dépôt: **20.03.1997**

(51) Int Cl.$^7$: **G01M 15/00**, G01L 3/00

(86) Numéro de dépôt international:
**PCT/EP97/01416**

(87) Numéro de publication internationale:
**WO 97/039323 (23.10.1997 Gazette 1997/45)**

(54) **PROCEDE D'ESTIMATION DU COUPLE DELIVRE PAR UN MOTEUR A COMBUSTION INTERNE**

VERFAHREN ZUR BESTIMMUNG DES DREHMOMENTES EINES VERBRENNUNGSMOTORS

METHOD FOR CALCULATING THE TORQUE OF AN INTERNAL COMBUSTION ENGINE

(84) Etats contractants désignés:
**DE GB SE**

(30) Priorité: **15.04.1996 FR 9604672**

(43) Date de publication de la demande:
**03.02.1999 Bulletin 1999/05**

(73) Titulaire: **Siemens VDO Automotive S.A.S.
31036 Toulouse cedex 01 (FR)**

(72) Inventeurs:
• **ROSSIGNOL, Alain
F-31300 Toulouse (FR)**

• **SUQUET, Michel
F-31270 Villeneuve-Tolosane (FR)**

(74) Mandataire: **Berg, Peter, Dipl.-Ing. et al
European Patent Attorney,
Siemens AG,
Postfach 22 16 34
80506 München (DE)**

(56) Documents cités:
**FR-A- 2 689 934 US-A- 4 691 288
US-A- 5 377 537**

## Description

La présente invention est relative à un procédé d'estimation du couple délivré par un moteur à combustion interne et, plus particulièrement, à un tel procédé mis en oeuvre à partir de l'observation des variations de la vitesse de rotation du vilebrequin du moteur.

Le couple délivré par un moteur à combustion interne est un paramètre important pour caractériser l'état de fonctionnement et les performances d'un tel moteur, notamment lorsque celui-ci propulse un véhicule automobile. Des appareils dits "couplemètres" permettent de mesurer le couple délivré par un moteur, lors d'essais au banc. Il n'est pratiquement pas possible d'embarquer un tel appareil dans un véhicule automobile, notamment pour des raisons de coût. Aussi a-t-on proposé divers procédés d'estimation du couple, à partir de mesures de la vitesse instantanée du moteur délivrées par un capteur couramment installé aujourd'hui dans les véhicules automobiles dont le moteur est commandé par un calculateur alimenté par divers signaux, dont celui fourni par le capteur de vitesse. On peut consulter à cet égard la publication de 1989 de W.B. RIBBENS et G. RIZZONI, intitulée "Applications of precise crankschaft position measurements for Engine testing, control and diagnosis" référencée SAE 890885 dans les publications de la "Society of Automotive Engineers" des USA. Cette publication décrit un procédé consistant à effectuer des calculs matriciels sur des mesures de vitesses instantanées réalisées au cours de chaque cycle moteur, en vue d'en déduire la valeur absolue du couple pour chaque cylindre et de détecter ainsi les variations anormales dudit couple. Ces calculs sont complexes et exigent des moyens de calcul puissants qu'il n'est actuellement pas concevable d'embarquer sur un véhicule automobile. De plus, selon cette publication, il semble que ce procédé ne soit utilisable qu'à bas régime (inférieur à 3500 tours/mn).

D'autres procédés d'estimation du couple font appel à une observation des variations de la vitesse du moteur sur un "horizon" temporel couvrant plusieurs phases de combustion successives du mélange air/carburant dans plusieurs cylindres du moteur. Une anomalie de combustion, tel qu'un raté d'allumage par exemple, dans l'un des cylindres observés, perturbe alors sensiblement l'observation globale réalisée et donc l'estimation qu'on en tire.

On connaît encore de la demande de brevet européen 532 419 déposée au nom de Régie Nationale des Usines Renault SA, un procédé et un dispositif pour produire une valeur représentative du couple "gaz" moyen engendré par chaque combustion d'un mélange dans les cylindres d'un moteur à combustion interne, le procédé consistant à élaborer une valeur "primaire" représentative de la durée de défilement devant un capteur de chacun d'une pluralité de repères de mesure disposés sur une couronne solidaire du volant d'inertie ou du vilebrequin du moteur, à traiter la valeur primaire pour produire deux valeurs secondaires respectivement représentatives de la vitesse angulaire moyenne sur les repères au cours d'une période de combustion dans le moteur et de la projection, sur une ligne de référence de phase des repères afférents aux périodes angulaires de combustion, de la composante alternative de la vitesse angulaire instantanée des repères, et à combiner ces deux valeurs secondaires pour en tirer une valeur représentative du couple recherché.

Ce procédé est susceptible de donner un résultat satisfaisant dans la mesure où 1) le "centre de combustion", ou maximum de pression dans un cylindre lors d'une combustion, reste sensiblement calé sur une position angulaire fixe du vilebrequin et 2) la vitesse moyenne du moteur ne varie pas sensiblement dans l'intervalle entre deux points morts haut (PMH).

On a représenté à la figure unique du dessin annexé les graphes des variations de la pression P dans un cylindre où se produit une combustion et les variations de vitesse angulaire $\Omega$ correspondantes, entre deux points morts haut PMH atteints consécutivement par deux pistons circulant dans deux cylindres d'un moteur, à quatre cylindres par exemple. On constate expérimentalement qu'à des régimes élevés, avec un mélange air/carburant de richesse normale, le centre de pression $P_{0\,max}$ reste centré sur une position fixe par rapport au point mort haut PMH, située dans le premier quart de l'intervalle angulaire séparant deux PMH consécutifs. Les fluctuations correspondantes de la vitesse angulaire du moteur sont représentées en $\Omega_0$ et présentent un maximum $\Omega_{0\,max}$ situé sensiblement à la fin du deuxième quart de l'intervalle entre PMH.

Par contre, dans d'autres modes de fonctionnement du moteur, par exemple à bas régime ou à régime moyen avec un mélange air/carburant de faible richesse, le pic de pression peut se décaler jusqu'à 45° d'angle de rotation du vilebrequin (position $P_{max}$) par rapport au centre de pression $P_{0\,max}$. On observe un déphasage correspondant de la vitesse angulaire $\Omega_{90}$ correspondante, qui est alors déphasée de $\pi/2$ par rapport aux fluctuations sensiblement sinusoïdales de la vitesse $\Omega_0$, à la fréquence des points morts haut PMH.

En dehors de ces modes de fonctionnement, on observe un déphasage $\Delta\Phi$ de $\Omega$ par rapport à $\Omega_0$, intermédiaire entre 0 et $\pi/2$.

On conçoit qu'un algorithme de calcul d'une estimation du couple d'un moteur à combustion interne qui ne tiendrait pas compte de ce déplacement du pic ou maximum de vitesse angulaire du vilebrequin, ne saurait procurer une estimation satisfaisante de ce couple, dans tous les modes de fonctionnement possibles du moteur.

La présente invention a précisément pour but de fournir un procédé d'estimation de ce couple qui soit fiable quel que soit le mode de fonctionnement du moteur, et quelle que soit la rapidité des variations de la vitesse moyenne de ce moteur.

On atteint ce but de l'invention, ainsi que d'autres qui apparaîtront à la lecture de la description qui va suivre, avec un procédé d'estimation du couple délivré par un moteur à combustion interne, à partir des variations de la vitesse de rotation du vilebrequin du moteur, ce procédé étant remarquable en ce que a) on définit, pour chaque phase de combustion d'un mélange air/carburant dans chacun des cylindres du moteur, une fenêtre d'observation délimitée par des positions angulaires prédéterminées du vilebrequin, b) on mesure dans chaque fenêtre une série d'écarts temporels $\Delta T_i$ séparant les passages du vilebrequin dans des positions angulaires prédéterminées, c) on calcule deux combinaisons linéaires $\Sigma a_i \Delta T_i$ et $\Sigma b_i \Delta T_i$ des écarts temporels $\Delta T_i$, chacun des coefficients $a_i$ et $b_i$ de ces combinaisons étant choisi pour amplifier les variations, dans ladite fenêtre d'observation, de la composante alternative de la vitesse angulaire du vilebrequin lors de la mesure de l'écart temporel $\Delta T_i$ correspondant, dans des premier et deuxième modes de fonctionnement du moteur respectivement pour lesquels les composantes alternatives observées sont déphasées l'une par rapport à l'autre d'un angle prédéterminé, et d) on tire une estimation du couple de la valeur d'une norme appliquée aux deux combinaisons linéaires et rapportée à la puissance cubique $\Delta T^3$ de l'écart temporel moyen mesuré dans une fenêtre prédéterminée.

Comme on le verra plus loin, ce procédé permet d'estimer précisément le couple délivré par le moteur dans tous les modes de fonctionnement de celui-ci, qu'ils soient aussi différents qu'un fonctionnement à régime normal ou élevé et un fonctionnement à bas régime ou à régime moyen et richesse faible.

D'autres caractéristiques et avantages de la présente invention apparaîtront à la lecture de la description qui va suivre et à l'examen du dessin annexé dans lequel la figure unique réunit des graphes utiles à la compréhension du procédé suivant l'invention.

Comme illustré sur cette figure, ce procédé est essentiellement basé sur l'observation des effets d'une combustion d'un mélange air/carburant dans un cylindre du moteur à combustion interne, sur la vitesse angulaire $\Omega$ du vilebrequin de ce moteur. Après allumage du mélange, la pression dans le cylindre atteint un maximum $P_{0\ max}$ peu après le point mort haut PMH, en régime normal ou élevé, ou un maximum plus ou moins retardé par rapport à $P_{0\ max}$, à bas régime par exemple, comme on l'a vu en préambule de la présente description. Il y a ensuite détente des gaz dans le cylindre, détente qui se développe jusqu'à ce qu'un autre piston atteigne à son tour son point mort haut, au cours d'un cycle de fonctionnement à quatre temps classique. Pour la clarté de la description qui va suivre, celle-ci concernera, à titre d'exemple illustratif et non limitatif seulement, un moteur à combustion interne à quatre cylindres.

Sur la figure, il apparaît que les maxima de vitesse angulaire $\Omega_{0\ max}$ et $\Omega_{90\ max}$ correspondant aux maxima de pression $P_{0\ max}$ et $P_{max}$ respectivement, sont sensiblement centrés à la fin du premier quart et à la moitié, respectivement, de l'intervalle de temps qui sépare deux passages consécutifs au PMH de pistons du moteur. On observe aussi sur cette figure que les variations de la vitesse angulaire du vilebrequin du moteur sont sensiblement sinusoïdales, de fréquence égale à la fréquence des passages successifs des cylindres du moteur à leur point mort haut. On comprendra que ces variations sont celles de la composante alternative de la vitesse angulaire du moteur, qui comprend aussi une composante continue. Les variations de celle-ci correspondent à des variations $\Delta N$ du régime N du moteur, que l'on a illustré à la figure par une variation de la pente de l'axe de la courbe représentant $\Omega$.

Suivant l'invention, on définit, pour chaque phase de combustion du mélange air/carburant dans chaque cylindre du moteur, une fenêtre d'observation de largeur supérieure à l'espace angulaire séparant deux passages consécutifs de deux pistons au PMH, de manière à autoriser une observation complète des phases d'accélération et de décélération du vilebrequin dues à la combustion du mélange air/carburant dans ledit cylindre du moteur. Toutefois cette fenêtre d'observation sera cependant avantageusement inférieure ou égale à 1,5 fois ledit espace angulaire. On définit alors 7 positions angulaires du vilebrequin atteintes successivement aux instants $t_0$ à $t_6$, ces instants étant séparés par des écarts temporels $\Delta T_i = t_{i+1} - t_i$ (i = 0 à 5). Les sept positions angulaires sont écartées angulairement les unes des autres d'un angle constant. Entre deux PMH, on compte ainsi quatre écarts temporels dont les limites coïncident sensiblement avec des points caractéristiques de la forme d'onde de la vitesse angulaire, soit donc avec un maximum, un minimum, ou un passage à zéro. On remarquera que le premier écart $\Delta T_0$ et le dernier $\Delta T_5$ se situent chacun dans un intervalle entre points morts haut adjacent à celui sur lequel porte principalement l'observation des variations de la vitesse angulaire.

Avant de poursuivre, on fait observer que si l'on mesure les écarts temporels $\Delta T_{n+1}$ et $\Delta T_n$ délimités par trois positions angulaires également écartées atteintes aux instants $t_{n-1}$, $t_n$, $t_{n+1}$, on démontre que le couple instantané à l'instant $t_{n+1}$ est tel que :

$$C_{n+1} \cong J\alpha \cdot \frac{1}{\Delta T_n^{\,3}} \cdot (\Delta T_{n+1} - \Delta T_n) \tag{1}$$

J étant le moment d'inertie de la partie tournante du moteur et $\alpha$ l'écart angulaire constant de deux positions angulaires successives.

J et $\alpha$ étant des constantes, il apparaît ainsi qu'il existe une relation de proportionnalité entre le couple et le rapport $\frac{\Sigma}{\Delta T^3}$ où $\Sigma = \Delta T_{n+1} - \Delta T_n$ est une combinaison linéaire des écarts temporels mesurés, et $\Delta T^3$ la puissance cubique de l'écart temporel moyen mesuré, $\Delta T_n$ étant très voisin de $\Delta T_{n+1}$ lors d'une observation d'écarts temporels dans une même fenêtre de mesure.

Suivant la présente invention, on procède à une estimation du couple en se basant sur l'existence d'une proportionnalité du même type entre un tel rapport et le couple, l'expression $\Sigma$ intervenant dans le rapport étant modifiée pour assurer une estimation précise du couple, quel que soit le mode de fonctionnement du moteur. Pour ce but, cette expression doit prendre en compte une éventuelle dérive spatiale de la forme d'onde de la variation de la vitesse angulaire, qui peut occuper une position quelconque entre l'une ou l'autre des positions illustrées au dessin en $\Omega_0$ et $\Omega_{90}$.

Pour ce faire, suivant l'invention, on calcule deux combinaisons linéaires $\Sigma a_i.\Delta T_i$ et $\Sigma b_i.\Delta T_i$ des écarts temporels $\Delta T_i$. Les coefficients $a_i$ et $b_i$ sont corrélés aux variations des vitesses angulaires $\Omega_0$, $\Omega_{90}$ respectivement, de manière à amplifier les variations, dans la fenêtre d'observation, de la composante alternative de la vitesse angulaire du vilebrequin observée d'une part, dans un premier mode de réalisation du fonctionnement à régime constant pour lequel le pic de combustion occupe sa position la plus probable et, d'autre part, dans un deuxième mode de fonctionnement où la vitesse angulaire est déphasée de celle du premier mode d'un angle $\Phi_0$ prédéterminé.

La première combinaison linéaire permet d'obtenir, en quelque sorte, une "projection" des variations de la vitesse $\Omega$ selon "l'axe" de phase de la courbe $\Omega_0$.

La deuxième combinaison linéaire réalise une projection similaire sur l'axe de phase de la courbe représentative de la vitesse déphasée.

Avantageusement, on choisit ce déphasage $\Phi_0$ tel que $\Phi_0 = \frac{\pi}{2}$. En effet, ayant calculé les valeurs des deux combinaisons linéaires $\Sigma a_i \Delta T_i$ et $\Sigma b_i \Delta T_i$, on peut appliquer à ces valeurs la norme euclidienne ou quadratique simple :

$$\left[\left(\Sigma a_i \cdot \Delta T_i\right)^2 + \left(\Sigma b_i \cdot \Delta T_i\right)^2\right]^{1/2}$$

et on introduit la norme ainsi calculée dans une expression du type de l'expression (1) ci-dessus où elle se substitue à la combinaison linéaire $(\Delta T_{n+1} - \Delta T_n)$, pour en tirer une estimation du couple instantané délivré par le moteur.

Cependant, le déphasage $\Phi_0$ peut être choisi différent de $\pi/2$, notamment quand les repères formés sur la couronne ou "cible" solidaire du volant d'inertie du moteur, ne permettent pas de régler ce déphasage à $\pi/2$. Dans ce cas, la norme à calculer prend la forme, un peu plus complexe, suivante :

$$\left[\left(\Sigma a_i \cdot \Delta T_i\right)^2 + \left(\Sigma b_i \cdot \Delta T_i\right)^2 + 2\Sigma a_i \Delta T_i \cdot \Sigma b_i \Delta T_i \cos\Phi_0\right]^{1/2}$$

A titre d'exemple illustratif et non limitatif seulement, on décrit maintenant un procédé de calcul des coefficients $a_i$ et $b_i$ intervenant dans les normes données ci-dessus.

On observe préalablement que, si on néglige les variations $\Delta N$ du régime du moteur correspondant aux variations de la vitesse angulaire moyenne de ce moteur, il suffit d'observer les variations de la vitesse angulaire instantanée entre deux points morts haut PMH, c'est-à-dire autour d'une unique combustion, pour estimer le couple moteur délivré par cette combustion. Dans l'exemple illustré à la figure, il est alors possible de se limiter à une combinaison linéaire à quatre coefficients, agissant sur les écarts temporels $\Delta T_i$ mesurés entre les instants $t_1$ et $t_5$, pour amplifier la variation de vitesse crête-à-crête dans la fenêtre d'observation réduite $[t_1, t_5]$ correspondant à un seul intervalle entre points morts haut PMH et à une seule combustion, tout en rejetant la composante continue (le régime moyen N du moteur).

On choisit alors des coefficients $a_i$ (ou $b_i$) alternativement positifs (+ 1 par exemple) ou négatif (- 1 par exemple) selon que la vitesse instantanée $\Omega$ se situe au-dessus ou au-dessous de la vitesse moyenne. Suivant l'invention, on choisit $a_i$ (ou $b_i$) de manière que $\Sigma a_i$ (ou $\Sigma b_i$) soit nulle pour éliminer l'influence de la composante continue.

Avantageusement, suivant la présente invention, pour éliminer l'influence d'une variation $\Delta N$ de la vitesse moyenne (ou régime N), telle que celle figurée au dessin pour $\Omega$, on choisit une fenêtre d'observation $[t_0, t_6]$ élargie à 1,5 fois la période du passage des PMH, cette fenêtre étant centrée sur le milieu $(t_3)$ de l'intervalle entre deux PMH consécutifs. En outre, on définit chacun des coefficients $a_i$, $b_i$ comme étant la somme de deux coefficients tels que $a_i = a'_i + a''_i$ et $b_i = b'_i + b''_i$. Les coefficients $a'_i$ et $b'_i$ sont définis sur quatre écarts temporels $\Delta T_i$ dans l'intervalle $[t_0, t_4]$ alors que les coefficients $a''_i$ et $b''_i$ sont définis sur les écarts temporels de l'intervalle $[t_2, t_6]$ ces intervalles étant ainsi chacun de durée sensiblement égale à celle d'un intervalle entre deux PMH consécutifs. Les sommes $\Sigma a'_i$, $\Sigma a''_i$ $\Sigma b'_i$ et $\Sigma''b_i$ sont toutes nulles conformément à ce qui a été indiqué ci-dessus pour éliminer l'influence de la composante continue.

On constate alors que l'influence d'une variation $\Delta N$ sur la première combinaison $\Sigma a'_i\Delta T_i$ se retrouve à l'identique dans la seconde $\Sigma a''_i\Delta T_i$, mais avec un signe opposé puisque dans la fenêtre $[t_2, t_6]$ la variation de $\Omega_0$ est en opposition de phase avec celle observée dans la fenêtre $[t_0, t_4]$. Ces influences s'éliminent donc dans les sommes $a_i$ = $a'_i$ + $a''_i$ réalisées terme à terme pour les écarts temporels $\Delta T_i$ correspondants. Il en est de même pour les coefficients $b_i$ de la combinaison linéaire $\Sigma b_i\Delta T_i$, choisis en outre de manière à assurer la même amplification que $\Sigma a_i\Delta T_i$.

Il apparaît ainsi qu'on élimine l'influence d'une variation $\Delta N$ du régime N du moteur en décomposant chaque coefficient $a_i$, $b_i$ en une somme de deux coefficients $a'_i$ + $a''_i$, $b'_i$ + $b''_i$, les suites des coefficients $a'_i$, $a''_i$, $b'_i$, $b''_i$, respectivement, étant chacune de somme nulle, les suites de chaque paire de suites ($a'_i$, $a''_i$ ; $b'_i$, $b''_i$) se déduisant l'une de l'autre par annulation, dans chaque suite, des coefficients associés à des écarts temporels symétriques d'écarts temporels de l'autre suite par rapport à l'instant médian $t_3$ de la fenêtre d'observation $[t_0, t_6]$.

On a illustré à la figure un mode de calcul des coefficients $a_i$, $b_i$, donné à titre illustratif et non limitatif seulement, de nombreux autres modes de calcul pouvant être envisagés et mis en oeuvre par l'homme de métier.

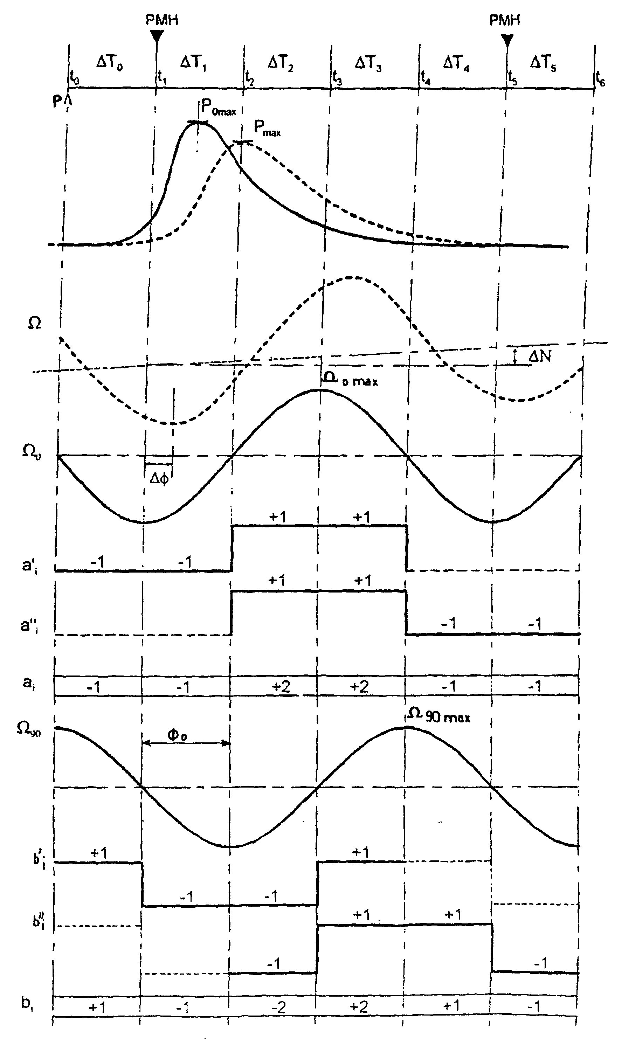

Ainsi, pour les coefficients $a_i$, on part de deux formes d'onde rectangulaires $a'_i$, $a''_i$ qui suivent la vitesse angulaire $\Omega_0$ sur les intervalles $[t_0, t_4]$ et $[t_2, t_6]$ respectivement, ces formes d'onde variant entre les niveaux - 1 et + 1 respectivement. Chaque forme d'onde suit la vitesse angulaire sur quatre écarts temporels. En additionnant, pour chaque écart $\Delta T_i$, les niveaux atteints par les deux formes d'onde, on obtient la série de coefficients $a_i$ figurant sur la ligne $a_i$ du graphe de la figure 1, soit :

$$a_0 = - 1, a_1 = - 1, a_2 = + 2, a_3 = + 2, a_4 = - 1, a_5 = - 1.$$

En opérant de même pour les coefficients $b_i = b'_i + b''_i$, on trouve :

$$b_0 = + 1, b_1 = - 1, b_2 = - 2, b_3 = + 2, b_4 = + 1, b_5 = - 1.$$

On comprend que, grâce à la présente invention, l'influence des écarts temporels $\Delta T_i$ significatifs est introduite dans le calcul du couple, quelle que soit la position de la forme d'onde de la vitesse angulaire dans la fenêtre d'observation. Si celle-ci est proche de la courbe $\Omega_0$, c'est la somme $\Sigma a_i\Delta Ti$ qui introduit cette influence, l'autre somme $\Sigma b_i\Delta T_i$ étant alors minimisée par les coefficients $b_i$. Si la forme d'onde se décale vers la courbe $\Omega_{90}$, on observe un phénomène inverse. Quel que soit le mode de fonctionnement du moteur, la combinaison linéaire significative est donc ainsi introduite dans le calcul du couple.

La mise en oeuvre du procédé suivant l'invention dans un véhicule automobile n'exige aucun matériel de calcul autre que celui qui est normalement embarqué pour la commande électronique de paramètres de commande du moteur tels que le temps d'injection ou l'angle d'avance à l'allumage. Le calculateur électronique classiquement utilisé à cet effet reçoit des signaux des divers capteurs et notamment d'un capteur sensible au défilement de dents formées à la périphérie d'une roue solidaire de l'arbre de sortie du moteur, le calculateur analysant les signaux fournis par ce capteur pour déterminer à tout instant la position angulaire du vilebrequin du moteur et donc le phasage des divers cylindres de ce moteur. Ces signaux, et une programmation convenable, permettent ainsi au calculateur d'exécuter le procédé d'estimation du couple suivant l'invention, qui ne fait appel qu'à du logiciel, solution particulièrement économique bien adaptée au grands volumes de production caractéristiques de l'industrie automobile.

Outre l'avantage essentiel de la présente invention, qui est de fournir une estimation fiable du couple délivré par le moteur quel que soit son mode de fonctionnement, y compris en présence de variations rapides de la vitesse moyenne angulaire du vilebrequin dans l'intervalle entre deux PMH, on remarquera que l'estimation faite ne fait intervenir, à chaque instant, que les accélérations et décélérations dues à une combustion du mélange air/carburant dans un seul des cylindres du moteur. Dans la technique antérieure, la fenêtre de mesure utilisée couvrait couramment plusieurs combustions successives dont les effets se masquent mutuellement au détriment de la précision de l'estimation du couple délivré par le moteur.

Bien entendu, l'invention n'est pas limitée au mode de réalisation décrit et représenté qui n'a été donné qu'à titre d'exemple. C'est ainsi que l'invention n'est pas limitée à sa mise en oeuvre dans un moteur à quatre cylindres et pourrait être transposée sans difficulté par l'homme de métier dans un moteur à cinq ou six cylindres par exemple.

**Revendications**

1. Procédé d'estimation du couple délivré par un moteur à combustion interne, à partir des variations de la vitesse de rotation du vilebrequin du moteur, **caractérisé en ce que** :

   a) on définit, pour chaque phase de combustion d'un mélange air/carburant dans chacun des cylindres du moteur, une fenêtre d'observation délimitée par des positions angulaires prédéterminées du vilebrequin,
   b) on mesure dans chaque fenêtre une série d'écarts temporels ($\Delta T_i$) séparant les passages du vilebrequin dans des positions angulaires prédéterminées,
   c) on calcule deux combinaisons linéaires ($\Sigma a_i \Delta T_i$) et ($\Sigma b_i \Delta T_i$) des écarts temporels ($\Delta T_i$), chacun des coefficients ($a_i$) et ($b_i$) de ces combinaisons étant choisi pour amplifier les variations, dans ladite fenêtre d'observation, de la composante alternative de la vitesse angulaire du vilebrequin lors de la mesure de l'écart temporel ($\Delta T_i$) correspondant, dans des premier et deuxième modes de fonctionnement du moteur respectivement pour lesquels les composantes alternatives observées ($\Omega_0$, $\Omega_{90}$) sont déphasées l'une par rapport à l'autre d'un angle ($\Phi_0$) prédéterminé, et
   d) on tire une estimation du couple de la valeur d'une norme appliquée aux deux combinaisons linéaires et rapportée à la puissance cubique ($\Delta T^3$) de l'écart temporel moyen mesuré dans la fenêtre prédéterminée.

2. Procédé conforme à la revendication 1, **caractérisé en ce que** le premier mode de fonctionnement est à régime sensiblement constant, avec un pic de combustion situé à sa position la plus probable.

3. Procédé conforme à la revendication 2, **caractérisé en ce que** le deuxième mode de fonctionnement présente un pic de combustion déphasé d'environ $\Phi_0 = 90°$ par rapport à celui du premier mode.

4. Procédé conforme à l'une quelconque des revendications 1 à 3, **caractérisé en ce qu'**on définit une fenêtre d'observation couvrant l'espace angulaire séparant deux passages consécutifs au point mort haut (PMH) de deux cylindres du moteur, cette fenêtre débordant de part et d'autre de cet espace angulaire de manière à présenter une largeur inférieure ou égale à 1,5 fois celle dudit espace angulaire.

5. Procédé conforme à la revendication 4, appliqué à un moteur à quatre cylindres, **caractérisé en ce que** les écarts temporels ($\Delta T_i$) correspondent à un écart angulaire ($\alpha$) constant égal au quart de l'espace angulaire séparant deux points morts haut consécutifs, la fenêtre d'observation couvrant six écarts angulaires.

6. Procédé conforme à la revendication 5, **caractérisé en ce que** les limites des divers écarts angulaires successifs coïncident avec des points caractéristiques de la forme d'onde de la composante alternative ($\Omega_0$, $\Omega_{90}$) de la vitesse angulaire du moteur entre deux points morts haut consécutifs.

7. Procédé conforme à la revendication 6, **caractérisé en ce que** lesdits points caractéristiques sont choisis parmi : les maxima, les minima, les passages à zéro.

8. Procédé conforme à la revendication 7, **caractérisé en ce qu'**on élimine l'influence de la composante continue de la vitesse angulaire ($\Omega$) du moteur en choisissant les coefficients ($a_i$) et ($b_i$) de telle manière que les sommes ($\Sigma a_i$) et $\Sigma b_i$) soient nulles.

9. Procédé conforme à la revendication 8, **caractérisé en ce qu'**on élimine l'influence d'une variation ($\Delta N$) du régime (N) du moteur en décomposant chaque coefficient ($a_i$, $b_i$) en une somme de deux coefficients ($a'_i + a''_i$ ; $b'_i + b''_i$), les suites des coefficients ($a'_i$, $a''_i$ ; $b'_i$, $b''_i$), respectivement, étant chacune de somme nulle, les suites de chaque paire de suites ($a'_i$, $a''_i$ ; $b'_i$, $b''_i$) se déduisant l'une de l'autre par l'annulation, dans chaque suite des coefficients associés à des écarts temporels symétriques d'écarts temporels de l'autre suite, par rapport à l'instant médian ($t_3$) de la fenêtre d'observation [$t_0$, $t_6$].

10. Procédé conforme à la revendication 9, **caractérisé en ce que** les coefficients ($a_i$) sont tels que : $a_0 = -1$, $a_1 = -1$, $a_2 = +2$, $a_3 = +2$, $a_4 = -1$, $a_5 = -1$ et **en ce que** les coefficients ($b_i$) sont tels que : $b_0 = +1$, $b_1 = -1$, $b_2 = -2$, $b_3 = +2$, $b_4 = +1$, $b_5 = -1$.

11. Procédé conforme à l'une quelconque des revendications précédentes, **caractérisé en ce qu'**on applique une norme euclidienne aux combinaisons linéaires ($\Sigma a_i \Delta Ti$) et ($\Sigma b_i \Delta Ti$).

**Patentansprüche**

1. Verfahren zum Bestimmen des von einem Verbrennungsmotor abgegebenen Drehmomentes anhand der Änderungen der Drehgeschwindigkeit der Kurbelwelle des Motors, **dadurch gekennzeichnet, dass**:

   a) für jede Phase der Verbrennung eines Luft/Kraftstoff-Gemisches in jedem der Zylinder des Motors ein Beobachtungsfenster definiert wird, das von vorgegebenen Winkelstellungen der Kurbelwelle begrenzt wird,
   b) in jedem Fenster eine Reihe zeitlicher Abstände ($\Delta T_i$) gemessen wird, die die Durchgänge der Kurbelwelle durch die vorgegebenen Winkelstellungen trennen,
   c) zwei lineare Kombinationen ($\Sigma a_i \Delta T_i$) und ($\Sigma b_i \Delta T_i$) der zeitlichen Abstände ($\Delta T_i$) berechnet werden, wobei jeder der Koeffizienten ($a_i$) und ($b_i$) dieser Kombinationen so gewählt wird, dass die in dem Beobachtungsfenster auftretenden Änderungen der Wechselkomponente der Winkelgeschwindigkeit der Kurbelwelle bei der Messung des entsprechenden zeitlichen Abstandes ($\Delta T_i$) in einem ersten und zweiten Betriebsmodus des Verbrennungsmotors verstärkt werden, bei denen die beobachteten Wechselkomponenten ($\Omega_0$, $\Omega_{90}$) um einen vorgegebenen Winkel ($\Phi_0$) zueinander phasenverschoben sind, und
   d) eine Schätzung des Drehmomentes aus einer Rechenregel gewonnen wird, die auf die beiden linearen Kombinationen angewendet und zu der dritten Potenz ($\Delta T^3$) des in dem vorgegebenen Fenster gemessenen zeitlichen Abstandes in Beziehung gesetzt wird.

2. Verfahren nach Anspruch 1, **dadurch gekennzeichnet, dass** der erste Betriebsmodus ein Betriebsmodus bei im wesentlichen konstanter Drehzahl mit einer Verbrennungsspitze ist, die sich an ihrer wahrscheinlichsten Stellung befindet.

3. Verfahren nach Anspruch 2, **dadurch gekennzeichnet, dass** der zweite Betriebsmodus eine Verbrennungsspitze hat, die um ungefähr $\Phi_0 = 90°$ bezüglich der des ersten Betriebsmodus phasenversetzt ist.

4. Verfahren nach einem der Ansprüche 1 bis 3, **dadurch gekennzeichnet, dass** ein Beobachtungsfenster definiert wird, das den Winkelraum abdeckt, der zwei aufeinanderfolgende Durchgänge durch den oberen Totpunkt (PMH) zweier Zylinder des Motors trennt, wobei dieses Fenster diesen Winkelraum beidseitig so begrenzt, dass er eine Breite hat, die kleiner gleich dem 1,5-fachen der Breite des betreffenden Winkelraumes ist.

5. Verfahren nach Anspruch 4 zur Anwendung bei einem Vierzylindermotor, **dadurch gekennzeichnet, dass** die zeitlichen Abstände ($\Delta T_i$) einem konstanten Winkelabstand ($\alpha$) entsprechen, der gleich dem Winkelraum ist, welcher zwei aufeinanderfolgende obere Totpunkte trennt, wobei das Beobachtungsfenster sechs Winkelabstände überdeckt.

6. Verfahren nach Anspruch 5, **dadurch gekennzeichnet, dass** die Grenzen der aufeinanderfolgenden verschiedenen Winkelabstände mit charakteristischen Punkten der Wellenform der Wechselkomponente ($\Omega_0$, $\Omega_{90}$) der Winkelgeschwindigkeit des Motors zwischen zwei aufeinanderfolgenden oberen Totpunkten zusammenfallen.

7. Verfahren nach Anspruch 6, **dadurch gekennzeichnet, dass** die charakteristischen Punkte aus den folgenden Punkten ausgewählt werden: den Maxima, den Minima und den Nulldurchgängen.

8. Verfahren nach Anspruch 7, **dadurch gekennzeichnet, dass** der Einfluss der konstanten Komponente der Winkelgeschwindigkeit ($\Omega$) des Motors eliminiert wird, indem die Koeffizienten ($a_i$) und ($b_i$) so gewählt werden, dass die Summen ($\Sigma a_i$) und ($\Sigma b_i$) zu Null werden.

9. Verfahren nach Anspruch 8, **dadurch gekennzeichnet, dass** der Einfluss einer Änderung ($\Delta N$) der Drehzahl (N) des Motors eliminiert wird, indem jeder Koeffizient ($a_i$, $b_i$) in eine Summe zweier Koeffizienten ($a'_i + a''_i$; $b'_i + b''_i$) zerlegt wird, wobei die Folgen der Koeffizienten ($a'_i$, $a''_i$; $b'_i$, $b''_i$) jeweils eine Nullsumme ergeben, die Folgen jedes Folgenpaares ($a'_i$, $a''_i$; $b'_i$, $b''_i$) sich voneinander abziehen durch Nullsetzen in jeder Folge von symmetrischen zeitlichen Abständen zugeordneten Koeffizienten der zeitlichen Abstände der anderen Folge bezüglich des mittleren Augenblicks ($t_3$) des Beobachtungsfensters [$t_0$, $t_6$].

10. Verfahren nach Anspruch 9, **dadurch gekennzeichnet, dass** die Koeffizienten ($a_i$) wie folgt sind: $a_0 = -1$, $a_1 = -1$, $a_2 = +2$, $a_3 = +2$, $a_4 = -1$, $a_5 = -1$, und dass die Koeffizienten (b;) wie folgt sind: $b_0 = +1$, $b_1 = -1$, $b_2 = -2$, $b_3 = +2$, $b_4 = +1$, $b_5 = -1$.

**11.** Verfahren nach einem der vorhergehenden Ansprüche, **dadurch gekennzeichnet, dass** eine Euklidische Rechenregel auf die linearen Kombinationen ($\Sigma a_i \Delta T_i$) und ($\Sigma b_i \Delta T_i$) angewendet wird.

**Claims**

**1.** Method for estimating the torque delivered by an internal combustion engine using variations in the speed of rotation of the crankshaft of the engine, **characterised in that**:

a) an observation window delimited by predetermined angular positions of the crankshaft is defined for each combustion phase of a fuel/air mixture in each of the cylinders of the engine,

b) a series of time gaps ($\Delta T_i$) is measured in each window, separating the movements of the crankshaft in predetermined angular positions,

c) two linear combinations ($\Sigma a_i \Delta T_i$) and ($\Sigma b_i \Delta T_i$) of the time gaps ($\Delta T_i$) are calculated, each of the coefficients ($a_i$) and ($b_i$) of these combinations being chosen to amplify the variations, in said observation window, of the alternating component of the angular speed of the crankshaft during the measurement of the corresponding time gap ($\Delta T_i$), in first and second modes of operation of the engine respectively for which the observed alternating components ($\Omega_0$, $Q_{90}$) are phase-shifted from each other by a predetermined angle ($\Phi_0$), and

d) an estimate is made of the torque from the value of a norm applied to the two linear combinations and related to the cubic power ($\Delta T^3$) of the mean time gap measured in the predetermined window.

**2.** Method according to Claim 1, **characterised in that** the first operating mode is at a more or less constant speed, with a combustion peak situated in its most probable position.

**3.** Method according to Claim 2, **characterised in that** the second operating mode has a combustion peak phase-shifted by approximately $\Phi_0 = 90°$ in relation to that of the first mode.

**4.** Method according to any one of Claims 1 to 3, **characterised in that** an observation window covering the angular space between two consecutive cylinders of the engine reaching top dead centre (TDC) is determined, this window exceeding this angular space on both sides so as to have a length less than or equal to 1.5 times that of said angular space.

**5.** Method according to Claim 4, applied to a four-cylinder engine, **characterised in that** the time gaps ($\Delta T_i$) correspond to a constant angular gap ($\alpha$) equal to one quarter of the angular space between two consecutive top dead centres, the observation window covering six angular gaps.

**6.** Method according to Claim 5, **characterised in that** the limits of the various successive angular gaps coincide with the characteristic points of the waveform of the alternating component ($\Omega_0$, $\Omega_{90}$) of the angular speed of the engine between two consecutive top dead centres.

**7.** Method according to Claim 6, **characterised in that** said characteristic points are chosen from: maximums, minimums and zeroes.

**8.** Method according to Claim 7, **characterised in that** the influence of the continuous component of the angular speed ($\Omega$) of the engine is eliminated by choosing the coefficients ($a_i$) and ($b_i$) so that the sums ($\Sigma a_i$) and ($\Sigma b_i$) are zero.

**9.** Method according to Claim 8, **characterised in that** the influence of a variation ($\Delta N$) in the speed ($N$) of the engine is eliminated by breaking down each coefficient ($a_i$, $b_i$) into a sum of two coefficients ($a'_i + a''_i$, $b'_i + b''_i$), the sums of the sequences of coefficients ($a'_i$, $a''_i$; $b'_i$, $b''_i$), respectively, each having a value of zero, the sequences of each pair of sequences ($a'_i$, $a''_i$; $b'_i$, $b''_i$) being calculated from each other by cancelling out, in each sequence of coefficients associated with the symmetrical time gaps of time gaps of the other sequence, in relation to the median instant ($t_3$) of the observation window [$t_0$, $t_6$].

**10.** Method according to Claim 9, **characterised in that** the coefficients ($a_i$) are such that: $a_0 = -1$, $a_1 = -1$, $a_2 = +2$,

$a_3 = + 2$, $a_4 = - 1$, $a_5 = - 1$ and **in that** the coefficients ($b_i$) are such that: $b_0 = + 1$, $b_1 = - 1$, $b_2 = - 2$, $b_3 = + 2$, $b_4 = + 1$, $b_5 = - 1$.

**11.** Method according to any one of the preceding claims, **characterised in that** a Euclidean norm is applied to the linear combinations ($\Sigma a_i \Delta T_i$) and ($\Sigma b_i \Delta T_i$).